# EUROPÄISCHE PATENTSCHRIFT

(11) **EP 1 372 866 B1**
(45) Veröffentlichungstag und Bekanntmachung des Hinweises auf die Patenterteilung: **03.01.2007**
(21) Anmeldenummer: 02737905.6
(22) Anmeldetag: 27.03.2002
(51) Int. Cl.: B05B 13/02

(54) **VERFAHREN UND VORRICHTUNG ZUM BESCHICHTEN EINES KUNSTSTOFFBEHÄLTERS**
METHOD AND DEVICE FOR COATING A PLASTIC CONTAINER
PROCEDE ET DISPOSITIF POUR MUNIR UN RECIPIENT EN MATIERE PLASTIQUE D'UN REVETEMENT

(30) Priorität: 27.03.2001 DE 10115087
(43) Veröffentlichungstag der Anmeldung: 02.01.2004
(73) Patentinhaber: KRONES AG, 93068 Neutraubling (DE)
(72) Erfinder: HUMELE, Heinz, 93107 Thalmassing (DE)
(74) Vertreter: Grünecker, Kinkeldey, Stockmair & Schwanhäusser Anwaltssozietät
(86) Internationale Anmeldenummer: PCT/EP2002/003462
(87) Internationale Veröffentlichungsnummer: WO 2002/092240

(56) Entgegenhaltungen:
- EP-A- 0 046 175
- US-A- 4 082 175
- US-A- 4 530 433
- US-A- 5 769 476

## Beschreibung

Die Erfindung bezieht sich auf ein Verfahren und eine Vorrichtung zum Beschichten eines Behälters aus Kunststoff, insbesondere einer PET-Flasche.

Aus der EP-A-46175 ist ein Verfahren und eine Vorrichtung zum Beschichten einer Walze mit einem elastomeren Beschichtungsmittel bekannt. Die Walze enthält einen zu beschichtenden Zylinder aus Metall, d. h. einem elektrisch leitenden Material. Das Beschichtungsmittel kann in einer Vielzahl von Lösungsmitteln gelöst sein, wobei jedoch Wasser nicht verwendet wird. Die Beschichtung erfolgt mithilfe eines Rotationszerstäubers, um den die Walzen mithilfe einer Fördereinrichtung in hängender Einzelförderung herumbewegt werden. Nach dem Aufbringen wird die Beschichtung getrocknet. Die Beschichtung erfolgt unter elektrostatischer Aufladung, wobei die Aufladung im Bereich des Rotationszerstäubers erfolgt.

Eine aus der WO95/29860 bekannte Vorrichtung ist für eine hängende Einzelförderung von Kunststoffbehältern, insbesondere von Flaschen, durch eine Beschichtungsanlage ausgelegt und enthält ein Fördermittel mit einem Spannkopf für den Flaschenhals und einen zusätzlichen Antrieb, der das Fördermittel und somit die Flasche um eine senkrechte Achse dreht, so dass die Beschichtung allseitig erfolgen kann. Jeder Spannkopf weist eine Vielzahl von Greiffingern auf, die von oben, außen über den Flaschenhals und unter einen am Flaschenhals vorgesehenen Wulst greifen. Die Greiffinger sind von außen durch eine Abdeckhülse abgedeckt und in Richtung auf den Flaschenhals vorgespannt. Die bekannte Vorrichtung und das bekannte Fördermittel sind für eine Sprühbeschichtung mit linearem Förderweg ausgelegt, wobei offen bleibt, ob Sprühpistolen eingesetzt werden, die relativ zielgenau arbeiten könnten. Trotzdem besteht die Gefahr von Funktionsstörungen durch abgelagertes Beschichtungsmittel.

Zum Lackieren von Karosserieteilen im Automobilbau werden Rotationszerstäuber eingesetzt, die an die speziellen physikalisch-chemischen Eigenschaften der Lacke angepasst sind und ggf. mit einer zusätzlichen elektrostatischen Aufladung arbeiten. Ein derartiger Rotationszerstäuber ist beispielsweise aus der DE 36 34 443 A1 bekannt.

Weiterhin ist es beispielsweise aus der DE-AS 25 17 504 oder der DE 26 28 228 C2 bekannt, Glasflaschen elektrostatisch zu beschichten, wobei in die Glasflaschen Elektroden eingebracht werden. Dabei werden überwiegend Pulver beispielsweise aus Polyester, Acryl, Polyurethan, Epoxid, Polyamid, Polyvinylchlorid, Polyäthylen usw. aufgesprüht und anschließend aufgeschmolzen. Polyurethan kann auch in flüssiger Form aufgebracht werden und auf der Flasche unter Wärmeeinwirkung polymerisiert werden. Die Anwendung von Wärme ist jedoch bei Kunststoffbehältern eher unerwünscht. Das Ein- und Ausführen der Antennen ist stark leistungshemmend und störungsbehaftet.

Der Erfindung liegt die Aufgabe zugrunde, ein kostengünstiges Verfahren zum gleichmäßigen Beschichten von Kunststoffbehältern, insbesondere PET-Flaschen, mit denen die Barriereeigenschaften dieser Behälter wirksam erhöht werden können, und eine konstruktiv einfache Vorrichtung für die Durchführung dieses Verfahrens zu schaffen.

Die Aufgabe wird durch das Verfahren nach Anspruch 1, und die Vorrichtung nach Anspruch 4 gelöst.

Das erfindungsgemäße Verfahren und die erfindungsgemäße Vorrichtung ermöglichen durch den Einsatz mindestens eines Rotationszerstäubers in Verbindung mit einem wässrigen Beschichtungsmittel eine äußerst gleichmäßige Beschichtung mit hoher Ausbeute und daher eine besonders wirtschaftliche Erhöhung der Barrierewirkung von PET- Flaschen oder dgl.

Eine äußerst sparsame, gleichmäßige Außenbeschichtung wird erreicht, wenn gemäß vorteilhaften Weiterbildungen der Erfindung die Behälter auf einer gekrümmten Bahn um den Rotationszerstäuber herumbewegt und dabei gleichzeitig um die eigene Achse gedreht werden.

Um auch bei höheren Behältern eine gleichmäßige Beschichtung sicherzustellen können mehrere Rotationszerstäuber in verschiedenen Höhenlagen eingesetzt werden. Besonders vorteilhaft ist es, wenn gemäß verschiedener Weiterbildungen der Erfindung der Rotationszerstäuber entlang seiner Rotationsachse hin und her bewegt wird oder wenn seine Rotationsachse gegenüber der Mittelachse der Behälter schräggestellt wird. In diesem Falle genügt normalerweise ein einziger Rotationszerstäuber.

Eine besonders hohe Leistung und Ausbeute wird erzielt, wenn das Beschichten unter elektrostatischer Aufladung erfolgt, wobei an das zum Rotationszerstäuber fließende Beschichtungsmittel eine Spannung von 85 kV angelegt wird. Herbei läßt sich eine Ausbeute von 95% und mehr erzielen. Die Verluste an Beschichtungsmittel und das Verschmutzen der Vorrichtung werden so extrem minimiert.

Mit dem erfindungsgemäßen Verfahren und der erfindungsgemäßen Vorrichtung läßt sich ein Beschichtungsmittel auf Polyvinylalkohol-Basis in wässriger Lösung von 5% verarbeiten, gegebenenfalls unter Zusatz von Äthanol. Hierbei kann mit einem einzigen Rotationszerstäuber in 2 bis 3 Sekunden eine gleichmäßige Beschichtung von 1 bis 5 Mikrometer aufgebracht werden, bei einer Leistung von ca. 20.0000 Fl/h.

Die Barrierewirkung kann allein durch das mit dem Rotationszerstäuber aufgetragene Beschichtungsmittel bewirkt werden. Es ist jedoch auch möglich, vorher eine andere Beschichtung, z. B. Siliziumoxid unter Plasmaeinwirkung, aufzubringen und dann erst das flüssige Beschichtungsmittel mit dem Rotationszerstäuber aufzubringen. Hierdurch kann eine synergistische Erhöhung der Barrierewirkung erzielt werden.

Andere vorteilhafte Weiterbildungen der Erfindung sind in den Unteransprüchen enthalten.

Ausführungsbeispiele der Erfindung werden nachfolgend anhand der Zeichnungen näher erläutert. Es zeigen:
- Fig. 1: eine schematische Seitenansicht einer Vorrichtung zum Beschichten von PET-Flaschen,
- Fig. 2: eine Draufsicht auf die Vorrichtung nach Fig. 1 in einem ersten Ausführungsbeispiel,
- Fig. 3: eine Draufsicht auf die Vorrichtung nach Fig. 1 in einem zweiten Ausführungsbeispiel,
- Fig. 4: eine Detaildarstellung einer Abwandlung der Vorrichtung nach Fig. 1,
- Fig. 5: eine perspektivische Darstellung eines ersten Fördermittels,
- Fig. 6: das Fördermittel aus Fig. 5 in einer ersten Stellung,
- Fig. 7: das Fördermittel aus Fig. 5 in einer zweiten Stellung, und
- Fig. 8: eine perspektivische Darstellung eines weiteren Fördermittels.

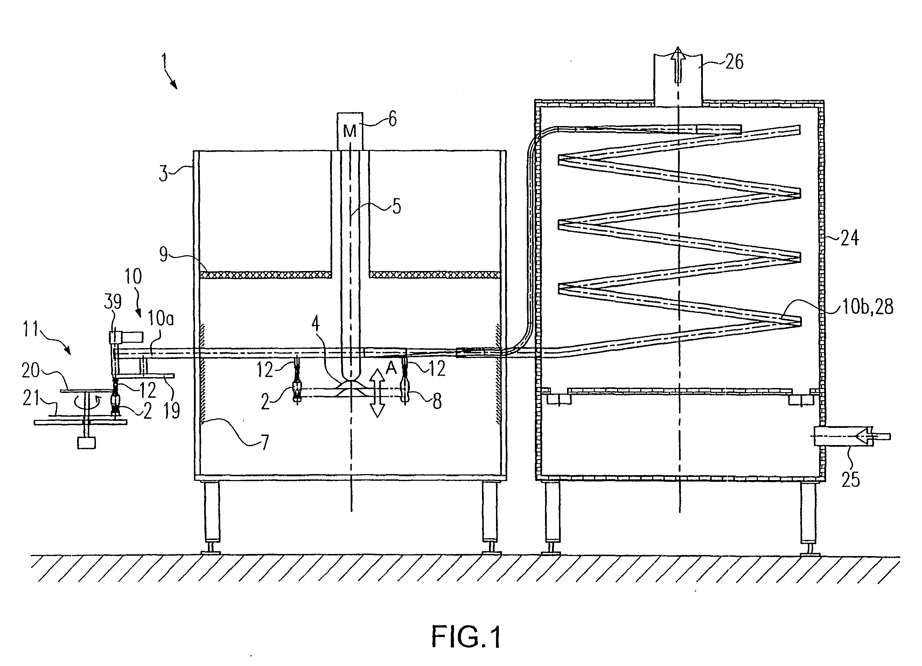

Fig. 1 zeigt eine erfindungsgemäße Vorrichtung 1 zum Beschichten von Außenflächen von Kunststoffbehältern, dargestellt sind Flaschen 2, die bevorzugt aus PET (Polyethylenterephtalath) bestehen. Derartige Flaschen finden zunehmende Verbreitung als Getränkeflaschen. Die Vorrichtung 1 enthält eine Beschichtungskammer 3, die als im Wesentlichen vollständig abgeschlossener Behälter mit Wandungen 7 ausgebildet ist. Im Inneren der Beschichtungskammer 3 ist wenigstens ein Rotationszerstäuber 4, beispielsweise ein Scheibenzerstäuber oder ein Glockenzerstäuber, angeordnet. Der Rotationszerstäuber 4 ist über eine Antriebswelle 5 um eine senkrechte Achse 5' drehbar und wird über einen Motor 6 rotierend angetrieben. Im dargestellten Ausführungsbeispiel ist der Rotationszerstäuber 4 durch den Motor 6 außerdem in Richtung des Pfeiles A entlang der vertikalen Achse 5' um einen Verschiebungsweg auf- und abbewegbar, der kleiner ist als die axiale Länge der Behälter 2. Die Hubfrequenz beträgt etwa ein Hub pro Sekunde. Es kann in üblicher Weise eine geerdete Elektrode 8 im Behälter 2 untergebracht werden. Der Beschichtungsbereich innerhalb der Beschichtungskammer 3 ist durch eine isolierende Abdeckung 9 abgegrenzt.

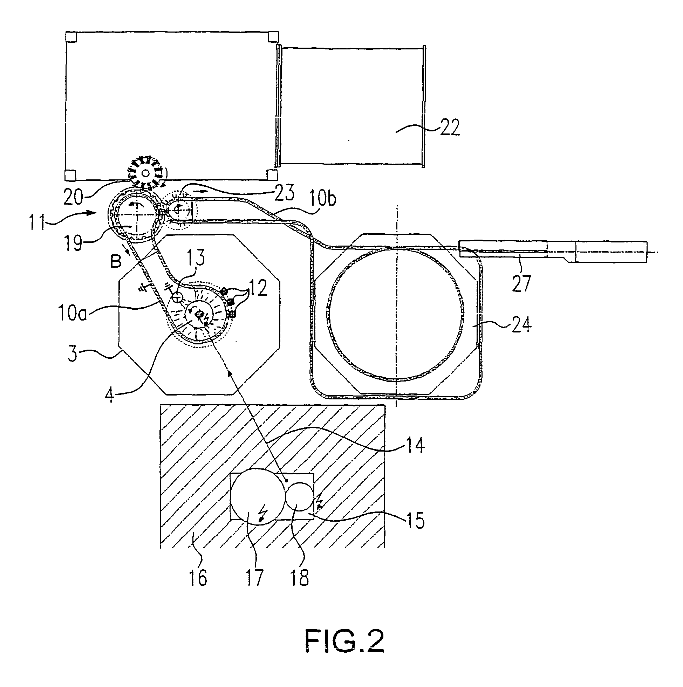

Die Behälter 2 werden durch eine insgesamt mit 10 bezeichnete Fördereinrichtung gefördert. Die Fördereinrichtung 10 enthält einen nicht gezeichneten, geeigneten Antrieb und im Ausführungsbeispiel gemäß Fig. 2 einen ersten Förderer 10a, der die Behälter 2 von einer Übergabestation 11 außerhalb der Beschichtungskammer 3 in die Beschichtungskammer 3 hinein und in einer fast geschlossenen, kreisbogenförmigen Bahn konzentrisch um den Rotationszerstäuber 4 herum führt. Der erste Förderer 10a enthält eine über den gesamten Weg durchlaufende, innerhalb der Beschichtungskammer 3 geerdete Schiene 35 und Fördermittel 12, die in der Lage sind, jeden Behälter 2 einzeln und hängend zu fördern. Die Fördermittel 12 folgen dicht aufeinander und sind miteinander gekoppelt, wobei jedoch in den Fig. 1 und 2 die Fördermittel nur bereichsweise angedeutet sind, um die Übersichtlichkeit der Zeichnungen zu gewährleisten.

Die durch die geerdete Schiene 35 des Fördermittels 10a um den Rotationszerstäuber 4 herumgebildete Bahn wird im Bereich des Ausführens und Einführens, in dem die Bahn notwendigerweise geringfügig offen ist, durch einen unter positiver Hochspannung stehenden Zylinder 13 geschlossen, der die gleichsinnig geladenen Teilchen des Beschichtungsmittels abstößt.

Der Rotationszerstäuber 4 wird über eine Zufuhrleitung 14 mit einem Beschichtungsmittel auf der Basis von 5% PVAL (Polyvinylalkohol) in wässriger Lösung versorgt. Die Zufuhrleitung 14 führt von einer Mischkammer 15 in einer Mischeinrichtung 16 durch die Antriebswelle 5 in den Rotationszerstäuber 4. In der Mischeinrichtung 16 befindet sich ein Vorratsbehälter 17 für Wasser und ein Vorratsbehälter 18 für PVAL sowie nicht gezeichnete Vorrichtungen zur elektrostatischen Aufladung, die auch an die Welle 5 bzw. die darin enthaltenen Leitungen für das Beschichtungsmittel und/oder den Rotationszerstäuber 4 angeschlossen sind, so dass die den Rotationszerstäuber 4 verlassenden Tröpfchen des Beschichtungsmittels ein positives Potential von ca. 85kV aufweisen.

Die Übergabestation 11 enthält einen Stützstern 19 zum Ausrichten der Fördermittel 12 sowie einen Transferstern 20 mit einer Stützscheibe 21 für den Boden des Behälters 2.

Die Übergabestation 11 übernimmt auf herkömmlich bekannte Weise die Behälter 2 aus einer Vorbeschichtungsanlage 22, in der die Behälter 2 mit einer Grundierung, einer Beschichtung zum Erzielen anderer Eigenschaften und/oder einer weiteren Beschichtung zur Verbesserung der Barriereeigenschaften, wie beispielsweise einer Plasmabeschichtung auf SiO₂-Basis versehen wurden.

Das erfindungsgemäße Verfahren wird durchgeführt, indem an der Übergabestation 11 jeweils ein Behälter 2 durch jeweils ein Fördermittel 12 übernommen wird und in hängender Einzelförderung in einer ununterbrochenen Reihe durch die Bahn des Förderers 10a in Richtung des Pfeiles B gefördert wird, wobei die Fördermittel 12 in weiter unten beschriebenen Weise, zumindest auf ihrer Bahn um den Rotationszerstäuber 4 herum zusätzlich um ihre eigene Achse gedreht werden und zwar ca. 3 mal während des Beschichtungsvorgangs.

Dem Rotationszerstäuber 4 wird über die Leitung 14 die wässrige Lösung des elektrostatisch aufgeladenen Beschichtungsmittels zugeführt und durch die Rotation des Rotationszerstäubers feinteilig versprüht. Dabei wird durch die axiale Bewegung über den Hub A nach oben und unten die gesamte Axiallänge der Behälter 2 überstrichen. Durch die elektrostatische Aufladung wird ein steter Strom der Teilchen des Beschichtungsmittels vom Rotationszerstäuber 4 in Richtung auf die durch den Kontakt mit dem Förderer 10 geerdeten Behälter 2 erzeugt, was das Beschichtungsergebnis weiter verbessert.

Die Hubbewegung A kann zweckmäßigerweise mit variabler Geschwindigkeit gesteuert werden, wobei der Rotationszerstäuber 4 bei denjenigen Außenbereichen des Behälters 2, die eine größere Flächen aufweisen, beispielsweise der Rumpf einer Flasche, länger verweilt als bei denjenigen Bereichen des Behälters, die eine geringere Außenoberfläche aufweisen, beispielsweise am Flaschenhals. Auf diese Weise kann eine gleichmäßige Schichtdicke erreicht werden, mit einer einstellbaren Dicke im Bereich von 2 bis 3 µm bei einer Beschichtungsdauer von 2 bis 3 sec.

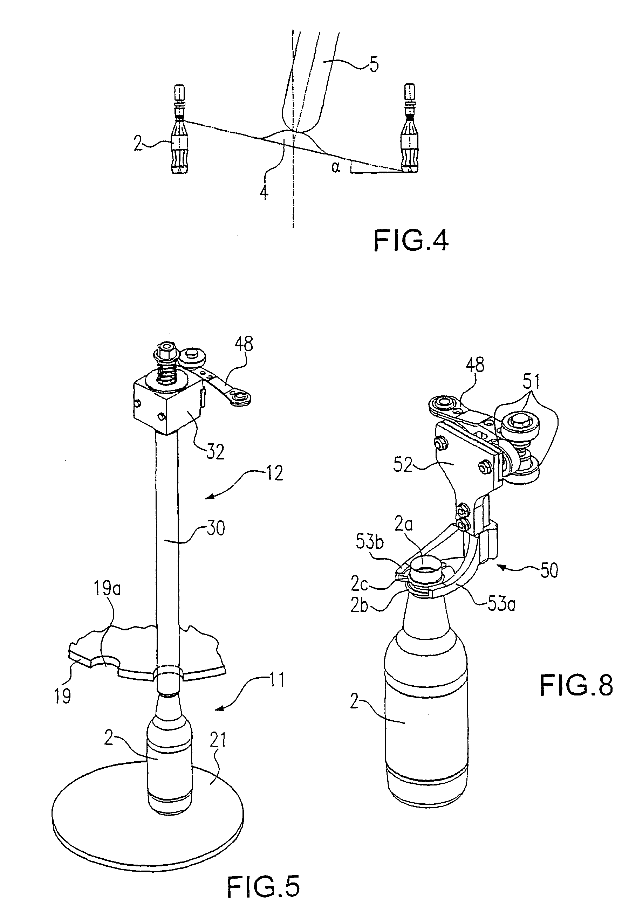

Der Rotationszerstäuber 4 kann jedoch auch, wie Fig. 4 zeigt, um den Winkel alpha gekippt bzw. in eine taumelnde Bewegung versetzt werden, so dass der Radialstrahl beispielsweise eines Scheibenrotationszerstäubers über die gesamte axiale Länge des Behälters 2 streicht, wobei die Bewegung an den Umlenkpunkten im Bereich des Flaschenhalses und des eingezogenen Flaschenbodens schneller erfolgt, so dass dort etwa die gleiche Schichtdicke erreicht wird, wie am Bauch der Flasche.

Nach dem Beschichten verlassen die an den Fördermitteln 12 hängenden Behälter 2 die Beschichtungskammer 3 und gelangen zu einer zweiten Transferstelle 23, in der die Behälter 2 auf einen zweiten Förderer 10b der Fördervorrichtung 10 übergeben werden. Auf diesem Förderer 10b werden die Behälter 2 in eine Trockenkammer 24 geleitet und dort wendelförmig von unten nach oben geführt. Die Trockenkammer 24 ist ebenfalls als geschlossener Behälter ausgebildet und enthält eine Heißluftzufuhr 25 und eine Abluftabführung 26. Beim Durchlaufen der Trockenkammer 24 wird die Außenbeschichtung innerhalb weniger Minuten getrocknet. Die fertig beschichteten und getrockneten Behälter werden über einen Abförderer 27 zur weiteren Behandlung abgezogen.

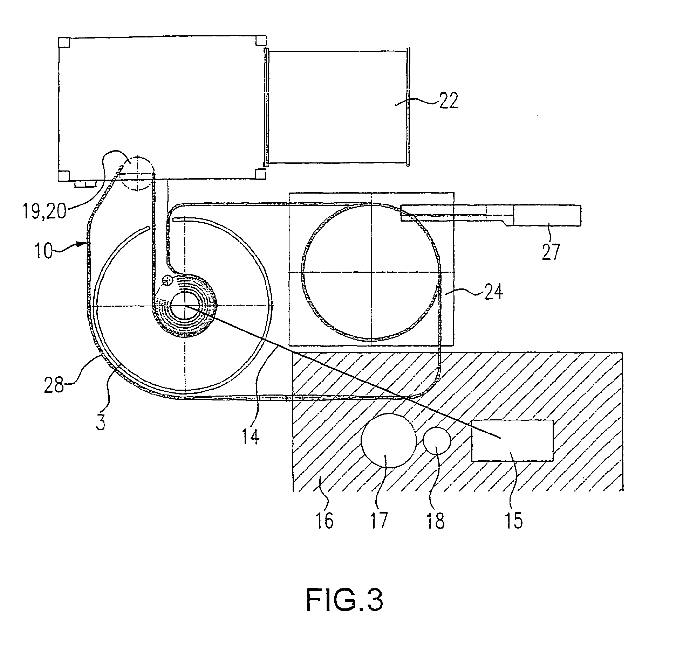

Wie Fig. 3 zeigt, kann die Fördereinrichtung 10 anstelle der getrennten Förderer 10a für die Beschichtungskammer 3 und 10b für die Trockenkammer 24 mit einem einzigen Förderer 28 versehen sein, der die Behälter 2 zuerst durch die Beschichtungskammer 3 und anschließend, ohne Übergabe, durch die Trockenkammer 24 schleust. Die anderen Merkmale der Fig. 3 entsprechen den oben beschriebenen Merkmalen der Fig. 1 und 2, sind mit den gleichen Bezugszeichen gekennzeichnet und nicht nochmals erläutert.

Anhand der Fig. 5 bis 7 wird nachfolgend das Fördermittel 12 näher erläutert. Das Fördermittel 12 enthält ein Schutzrohr 30, das über ein Drehlager 31 mit einem Wagen 32 verbunden ist, der über Laufrollen 34 in einer geeigneten Schiene 35 läuft. Das Schutzrohr 30 ist am Wagen 32 axial unverschiebbar und mit senkrechter Mittellinie 30' gelagert. Durch das Innere des Schutzrohres 30 erstreckt sich eine Betätigungsstange 36, die an dem vom Wagen 32 abgewandten, freien Ende des Schutzrohres 30 mit einem reibschlüssig arbeitenden Klemmkopf 37 verbunden ist. Das andere freie Ende der Betätigungsstange 36 ragt aus dem oberen freien Ende des Schutzrohres 30 heraus und ist dort mit einem Druckstück 38 versehen, das mit einem stationären Nocken 39, der an geeigneten Stellen in der Fördereinrichtung 10 angeordnet ist, in Eingriff treten kann. Das Druckstück 38 stützt sich über eine Feder 40 auf dem Wagen 32 ab. Durch den Nocken 39 wird das Druckstück 38 gegen die Wirkung der Feder 40 so weit an den Wagen 32 gedrückt, dass die Betätigungsstange 36 mit dem Klemmkopf 37 aus dem unteren freien Ende des Schutzrohres 30 heraustritt.

Der Klemmkopf 37 weist einen Anschlag 41 und einen elastischen Reibring 42 in Form eines Federrings auf. Der Anschlag 41 ist so ausgebildet, dass er auf einen eine Öffnung 2a des Behälters 2 umgebenden, oberen Rand aufsetzbar ist. Der Reibring 42 befindet sich an einem Ansatz 43, der in die Öffnung 2a hineintaucht, wobei der Reibring 42 reibschlüssig an der inneren Oberfläche im Bereich der Öffnung 2a derart anliegt, dass der Behälter 2 bei der Bewegung der Betätigungsstange 36 mitgenommen wird, sobald der Ansatz 43 bis zum Anschlag 41 in die Öffnung 2a des Behälters 2 eingeschoben wurde.

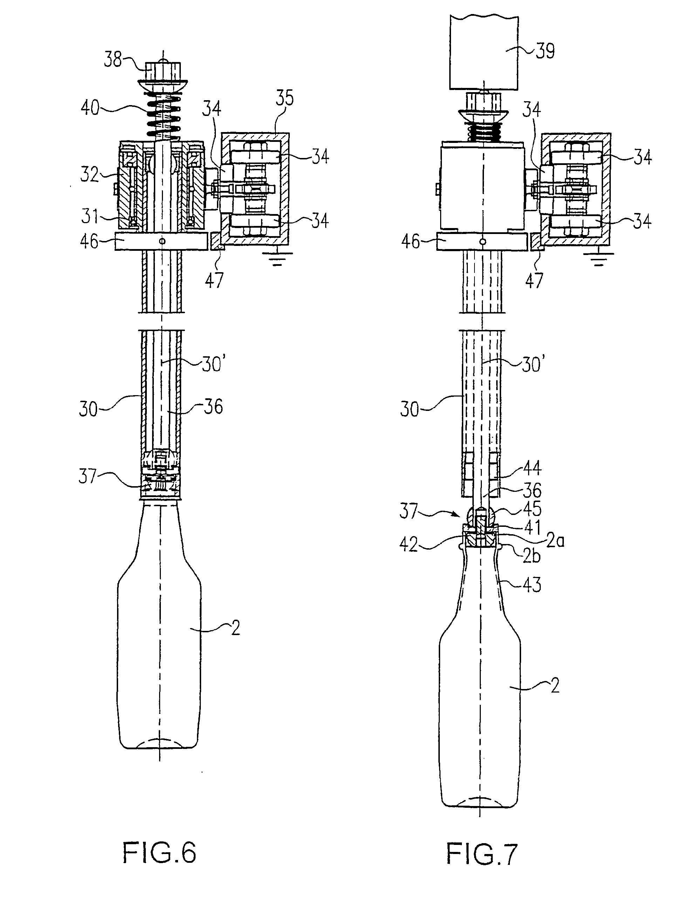

Der Anschlag 41 schlägt weiterhin an seiner Oberseite an einen Gegenanschlag 44 im Inneren des Schutzrohres 30 an, sobald der Feder 40 gestattet wurde, das Druckstück 38 und somit die Betätigungsstange 36 in die in Fig. 6 gezeichnete Stellung nach oben zu schieben. Der Gegenanschlag 44 ist so angeordnet, dass der gesamte Klemmkopf 37 und der Gewindebereich des Behälters 2, der auf dem Ansatz 43 sitzt, in das Schutzrohr 30 eintaucht und somit vom Schutzrohr 30 gegen eine Beschichtung geschützt wird. Der Behälter 2 ist weiterhin mit einem Randwulst oder Halskragen 2b versehen, der im Abstand unterhalb der Öffnung 2a angeordnet ist und gegebenenfalls an das freie Ende des Schutzrohres 30 anschlägt, sobald der Klemmkopf 37 im Schutzrohr 30 verschwunden ist. Dabei wird der Klemmkopf 37 durch ein balliges Führungselement 45 geführt.

Durch den metallischen Kontakt über Federring 42 und Klemmkopf 37 im Inneren und Schutzrohr 30 außen wird der Behälter 2 gut geerdet, so dass ohne im Inneren angeordnete Kathode eine gleichmäßige Aussenbeschichtung möglich ist.

Das Schutzrohr 30 ist drehfest mit einem Reibrad 46 eines weiteren Antriebs verbunden, das mit einer stationären Reibschiene 47 in Eingriff steht. Die Reibschiene 47 ist an denjenigen Stellen angeordnet, wo der Behälter 2 um die Achse 30' gedreht werden muss, d.h. insbesondere auf der Bahn rund um den Rotationszerstäuber 4. Unter Umständen ist es jedoch auch zweckmäßig, die Behälter 2 in Bereichen der Trockenkammer 34 zu drehen. Das Reibrad 46 überträgt die Drehbewegung auf das Schutzrohr 30, und das Schutzrohr 30 überträgt die Drehbewegung auf den Klemmkopf 37 und damit auf den Behälter 2, solange sich der Reibkopf 37 im Schutzrohr 30 befindet, das für eine gute Stabilisierung des Behälters während der Rotation sorgt.

Wie insbesondere Fig. 5 zeigt, kann das Schutzrohr 30 relativ lang sein, ohne dass seine Funktion gestört wird. Dadurch ist es möglich, den Behälter 2 in einem sicheren Abstand zum Wagen 32 anzuordnen, so dass eine Verschmutzung des Wagens 32 und der Schiene 35 weitgehend vermieden wird. Bevorzugt ist das Schutzrohr 30 länger als die axiale Länge des Behälters 2.

Wie Fig. 5 zeigt, werden die Behälter 2 automatisch durch das Fördermittel 12 aufgenommen, wenn das Fördermittel 12 und die Behälter 2 im Bereich der Übergabestation 11 zusammengeführt werden. Die Fördermittel 12 werden durch die Fördereinrichtung 10 in vorbestimmten Abständen in den Bereich des Stützsterns 19 gefördert, wobei die vorbestimmten Abstände zwischen den Fördermitteln 12 durch Verbindungslaschen 48 bestimmt werden, die zwei aufeinanderfolgende Wagen 32 gelenkig miteinander verbinden. Der Stützstern 19 nimmt jeweils ein Schutzrohr 30 eines Fördermittels 12 in einer Ausnehmung 19a auf, so dass ein Pendeln des langen Schutzrohres 30 vermieden wird. Auf der Stützscheibe 21, seitlich geführt durch das nicht gezeichnete, ebenfalls mit Ausnehmungen versehene Transferrad 20, dessen Ausnehmungen im Bereich des Flaschenhalses und des Flaschenrumpfes angreifen, werden die Behälter 2 herangeführt. Sobald sich das Schutzrohr 30 oberhalb des Flaschenhalses befindet, wird durch einen geeignet angebrachten Nocken 39 dafür gesorgt, dass der Klemmkopf 37 aus dem Schutzrohr 30 heraus und mit seinem Ansatz 43 in die Öffnung 2a des Behälters 2 hinein bewegt wird, bis der Anschlag 41 am oberen Rand anschlägt, wobei der Reibring 42 elastisch zusammengedrückt wird und so die erforderliche Klemmkraft erzeugt. Damit sitzt der Behälter 2 fest auf dem Klemmkopf 37 und kann sich zusammen mit dem Klemmkopf 37 relativ zum Schutzrohr 30 bewegen. Während seiner Bewegung durch die Beschichtungskammer 3 wird der Klemmkopf 37 durch Entspannung der Feder 40 in das Schutzrohr 30 hineingezogen, wobei das Schutzrohr 30 den Klemmkopf 37 und den randnahen Kopfbereich des Behälters 2, wo meist ein Gewinde sitzt, gegen eine unerwünschte Beschichtung schützt.

Soll der Behälter 2 wieder vom Klemmkopf 37 abgenommen werden, so wird wiederum über einen Nocken 39 der Klemmkopf nach außen geschoben, so dass der Behälter 2 durch geeignete Vorrichtungen ergriffen und abgezogen werden kann.

Dieses Abziehen kann durch ein in Fig. 8 näher dargestelltes Fördermittel 50 geschehen, das als Fördermittel auf dem zweiten Förderer 10b durch die Trockenkammer 24 verwendet wird. Das Fördermittel 50 ist wiederum für eine hängende Einzelförderung der Behälter 2, insbesondere von Flaschen ausgelegt. Durch eine zweckmäßige Anordnung von Laufrollen 51 ist dafür gesorgt, dass das Fördermittel 50 auf den gleichen Schienen 35 laufen kann, wie das Fördermittel 12. Auch das Fördermittel 50 enthält einen Wagen 52, an dem ein Paar elastischer Greifarme 53a und 53b befestigt sind, die eine Greifklammer bilden, deren Öffnungsweite im entspannten Zustand geringfügig kleiner ist als der Außendurchmesser des Behälters 2 unmittelbar oberhalb des Wulstes 2b.

Der Behälter 2 wird beispielsweise an der Transferstation 23 der Fig. 2 vom Fördermittel 12 auf das Fördermittel 50 übergeben, indem zunächst durch einen Nocken 39 dafür gesorgt wird, dass sich der Klemmkopf 37 des Fördermittels 12 mit dem anhängenden Behälter 2 aus dem Schutzrohr 30 herausbewegt. Dann wird das Fördermittel 12 in den Bereich des Fördermittels 50 geführt, so dass sich die elastischen Greifarme 53a und 53b um den Flaschenhals oberhalb des Wulstes 2b schieben. Wird jetzt der Klemmkopf 37 durch die Feder 40 nach oben bewegt, schlägt der Wulst 2b von unten an die Greifarme 53a und 53b an, so dass der Behälter 2 vom Klemmkopf 37 abgestreift und durch die Klemmkraft der elastischen Greifarme 53a und 53b formschlüssig gehalten und bei der Bewegung des Fördermittels 50 mitgenommen wird.

Die Haltekraft der Greifarme 53a, 53b kann noch durch einen weiteren Wulst 2c unterstützt werden, der sich in einem Abstand, der der Breite der Greifarme 53a, 53b entspricht, oberhalb des Wulstes 2b befindet.

In Abwandlung der beschriebenen und gezeichneten Ausführungsbeispiele kann das Verfahren und die Vorrichtung auch zum Beschichten von Behältern von anderer Art als Flaschen verwendet werden. Das Fördermittel kann die Behälter auch in anderen Bereichen einer Handhabungsanlage für derartige Behälter, außerhalb von Beschichtungs- und Trocknungsanlagen fördern. Statt des Klemmkopfes kann auch das Schutzrohr axial bewegt werden. Das Beschichtungsmittel kann direkt in der Leitung zum Rotationszerstäuber und kurz vor seinem Austritt gemischt und/oder statisch aufgeladen werden. Statt eines einzigen Rotationszerstäubers können mehrere Rotationszerstäuber eingesetzt werden, wobei die Rotationszerstäuber mit unterschiedlichen Beschichtungsmengen pro Zeiteinheit versorgt werden können, so dass entweder unterschiedliche Schichtdicken oder eine gleichmäßige Schichtdicke auf unterschiedlich großen Flächen erzielt werden kann. Die Trocknung kann auch durch UV-Strahlung oder andere geeignete Trocknungsmittel erfolgen.

## Patentansprüche

1. Verfahren zum Beschichten eines mit einer Öffnung versehenen Behälters (2) aus Kunststoff, insbesondere einer PET-Flasche, wobei der Behälter (2) geerdet und durch einen Rotationszerstäuber (4) auf seiner Außenseite mit einer Beschichtung aus einem die Barriereeigenschaften des Behälters (2) verbessernden, elektrostatisch aufgeladenen Beschichtungsmittel auf der Basis von 5% Polyvinylalkohol in wässriger Lösung versehen und die Beschichtung anschließend getrocknet wird.

2. Verfahren nach Anspruch 1, **dadurch gekennzeichnet, dass** der Behälter (2) auf einer gekrümmten Bahn um den Rotationszerstäuber (4) herum bewegt wird.

3. Verfahren nach Anspruch 1 oder 2, **dadurch gekennzeichnet, dass** der Behälter (2) während des Beschichtens um seine eigene Achse gedreht wird.

4. Vorrichtung zum Beschichten eines mit einer Öffnung versehenen Behälters (2) aus Kunststoff, insbesondere einer PET-Flasche, zum Durchführen des Verfahrens nach einem der Ansprüche 1 bis 3, **gekennzeichnet durch** eine mit mindestens einem Rotationszerstäuber (4) für ein Beschichtungsmittel auf der Basis von 5% Polyvinylalkohol in wässriger Lösung versehene Beschichtungskammer (3), eine sich an die Beschichtungskammer (3) anschließende Trockenkammer (24), eine Fördereinrichtung (10) mit Fördermitteln (12, 50) für eine hängende Einzelförderung des Behälters (2) auf einer gekrümmten Bahn um den Rotationszerstäuber (4) herum, und einer Mischkammer (15) zum Mischen des Beschichtungsmittels mit Wasser, die über eine Zufuhrleitung (14) mit dem Rotationszerstäuber (4) verbunden ist, wobei die Mischkammer (15) und/oder die Zufuhrleitung (14) und/oder der Rotationszerstäuber (4) an einen Hochspannungsgenerator angeschlossen ist/sind.

5. Vorrichtung nach Anspruch 4, **dadurch gekennzeichnet, dass** der Rotationszerstäuber (4) entlang einer Rotationsachse axial verschiebbar ist.

6. Vorrichtung nach Anspruch 4 oder 5, **dadurch gekennzeichnet, dass** die Rotationsachse des Rotationszerstäubers (4) gegenüber der Mittelachse des Behälter (2) schräggestellt ist.

7. Vorrichtung nach einem der Ansprüche 4 bis 6, **dadurch gekennzeichnet, dass** die Fördereinrichtung (10) einen gemeinsamen Förderer (28) aufweist, der sowohl durch die Beschichtungskammer (3) als auch die Trockenkammer (24) geführt ist.

8. Vorrichtung nach einem der Ansprüche 4 bis 6, **dadurch gekennzeichnet, dass** die Fördereinrichtung (10) einen ersten Förderer (10a) in der Beschichtungskammer (3), einen zweiten Förderer (10b) in der Trockenkammer (24) und eine zwischen den beiden Förderern (10a, 10b) angeordnete Übergabestation (23) aufweist.

9. Vorrichtung nach einem der Ansprüche 4 bis 8, **dadurch gekennzeichnet, dass** das Fördermittel (12) für eine hängende Einzelförderung des Behälters (2) einen in die Öffnung (2a) des Behälters (2) eingreifenden Klemmkopf (37) und ein Schutzrohr (30) aufweist, wobei der Klemmkopf (37) relativ zum Schutzrohr (30) derart bewegbar ist, dass er in einer ersten Position innerhalb des Schutzrohres (30) angeordnet ist und in einer zweiten Position aus dem Schutzrohr (30) ragt.

10. Vorrichtung nach Anspruch 9, **dadurch gekennzeichnet, dass** das Schutzrohr (30) eine axiale Länge aufweist, die die axiale Länge des Behälters (2) übersteigt.

11. Vorrichtung nach Anspruch 9 oder 10, **dadurch gekennzeichnet, dass** der Klemmkopf (37) durch eine Betätigungsstange (36) relativ zum Schutzrohr (30) bewegbar ist, wobei sich die Betätigungsstange (36) axial durch das Schutzrohr (30) hindurcherstreckt, durch eine Feder (40) in der ersten Position des Klemmkopfes (37) belastet ist und mit einer Nockenangriffsfläche (38) versehen ist, durch die der Klemmkopf (37) gegen die Wirkung der Feder (40) in seine zweite Position drückbar ist.

12. Vorrichtung nach einem der Ansprüche 9 bis 11, **dadurch gekennzeichnet, dass** das Fördermittel (12) einen Reibantrieb (46, 47) zum Drehen des Klemmkopfes (37) um seine Achse (30') aufweist.

13. Vorrichtung nach einem der Ansprüche 9 bis 12, **dadurch gekennzeichnet, dass** die Fördereinrichtung (10) ein Fördermittel (50) für die hängende Einzelförderung des Behälters (2) aufweist, das eine mit einer Wulst (2b) um die Öffnung (2a) des Behälters (2) zusammenwirkende, elastische Greifklammer (53a, 53b) enthält.

## Claims

1. A method for coating a plastic container (2) provided with an opening, particularly a PET bottle, the container (2) being grounded and provided by a rotating atomizer (4) on its outside with a coating consisting of an electrostatically charged coating agent which improves the barrier properties of the container (2) and is based on 5% polyvinyl alcohol in aqueous solution, and the coating being subsequently dried.

2. The method according to claim 1, **characterized in that** the container (2) is moved along a curved path around the rotating atomizer (4).

3. The method according to claim 1 or 2, **characterized in that** the container (2) is rotated about its own axis during coating.

4. A device for coating a plastic container (2) provided with an opening, particularly a PET bottle, for carrying out the method according to any one of claims 1 to 3, **characterized by** a coating chamber (3) provided with at least one rotating atomizer (4) for a coating agent based on 5% polyvinyl alcohol in aqueous solution, a drying chamber (24) following the coating chamber (3), a conveying device (10) with conveying means (12, 50) for a suspended individual transportation of the container (2) along a curved path around the rotating atomizer (4), and a mixing chamber (15) for mixing the coating agent with water, the chamber (15) being connected via a supply line (14) to the rotating atomizer (4), the mixing chamber (15) and/or the supply line (14) and/or the rotating atomizer (4) being connected to a high-voltage generator.

5. The device according to claim 4, **characterized in that** the rotating atomizer (4) is axially displaceable along an axis of rotation.

6. The device according to claim 4 or 5, **characterized in that** the axis of rotation of the rotating atomizer (4) is inclined relative to the central axis of the container (2).

7. The device according to any one of claims 4 to 6, **characterized in that** the conveying means (10) comprises a joint conveyor (28) which is guided through both the coating chamber (3) and the drying chamber (24).

8. The device according to any one of claims 4 to 6, **characterized in that** the conveying device (10) comprises a first conveyor (10a) in the coating chamber (3), a second conveyor (10b) in the drying chamber (24), and a transfer station (23) arranged between the two conveyors (10a, 10b).

9. The device according to any one of claims 4 to 8, **characterized in that** the conveying means (12) for a suspended individual transportation of the container (2) comprises a clamping head (37) engaging into the opening (2a) of the container (2), and a protective tube (30), the clamping head (37) being movable relative to the protective tube (30) in such a way that it its arranged in a first position inside the protective tube (30) and projects in a second position out of the protective tube (30).

10. The device according to claim 9, **characterized in that** the protective tube (30) has an axial length exceeding the axial length of the container (2).

11. The device according to claim 9 or 10, **characterized in that** the clamping head (37) is movable by an actuating rod (36) relative to the protective tube (30), the actuating rod (36) extending axially through the protective tube (30), loaded by a spring (40) in the first position of the clamping head (37) and provided with a cam engagement surface (38) by which the clamping head (37) can be pressed against the action of the spring (40) into its second position.

12. The device according to any one of claims 9 to 11, **characterized in that** the conveying means (12) comprises a friction drive (46, 47) for rotating the clamping head (37) about its axis (30').

13. The device according to any one of claims 9 to 12, **characterized in that** the conveying device (10) comprises a conveying means (50) for the suspended individual transportation of the container (2), the conveying means including an elastic gripper clamp (53a, 53b) cooperating with a bead (2b) around the opening (2a) of the container (2).

## Revendications

1. Procédé pour revêtir un conteneur (2) en matière plastique, pourvu d'une ouverture, en particulier une bouteille en PET, le conteneur (2) étant mis à la terre et étant muni sur son côté extérieur, par un pulvérisateur rotatif (4), d'un revêtement en un produit de revêtement chargé en électricité statique améliorant les propriétés de barrière du conteneur (2), à base de 5 % d'alcool polyvinylique en solution aqueuse et le revêtement étant ensuite séché.

2. Procédé selon la revendication 1, **caractérisé en ce que** le conteneur (2) est déplacé sur une trajectoire courbe autour du pulvérisateur rotatif (4).

3. Procédé selon la revendication 1 ou 2, **caractérisé en ce que** pendant l'enduction, le conteneur (2) est tourné autour de son propre axe.

4. Dispositif pour revêtir un conteneur (2) en matière plastique pourvu d'une ouverture, en particulier une bouteille en PET, destiné à mettre en oeuvre le procédé selon l'une des revendications 1 à 3, **caractérisé par** une enceinte d'enduction (3) comportant au moins un pulvérisateur rotatif (4) pour un produit de revêtement à base de 5 % d'alcool polyvinylique en solution aqueuse, une enceinte de séchage (24) se raccordant à l'enceinte d'enduction (3), un dispositif de convoyage (10) comportant des moyens de convoyage (12, 50) pour un convoyage individuel suspendu du conteneur (2) sur une trajectoire courbe autour du pulvérisateur rotatif (4), et une chambre de mélange (15) pour mélanger le produit d'enduction avec de l'eau, qui est reliée par une conduite d'alimentation (14) au pulvérisateur rotatif (4), la chambre de mélange (15) et/ou la conduite d'alimentation (14) et/ou le pulvérisateur rotatif (4) étant relié(s) à un générateur de haute tension.

5. Dispositif selon la revendication 4, **caractérisé en ce que** le pulvérisateur rotatif (4) est capable de coulisser axialement le long d'un axe de rotation.

6. Dispositif selon la revendication 4 ou 5, **caractérisé en ce que** l'axe de rotation du pulvérisateur rotatif (4) est incliné par rapport à l'axe médian du conteneur (2).

7. Dispositif selon l'une des revendications 4 à 6, **caractérisé en ce que** le dispositif de convoyage (10) présente un convoyeur (28) commun qui traverse aussi bien l'enceinte d'enduction (3) que l'enceinte de séchage (24).

8. Dispositif selon l'une des revendications 4 à 6, **caractérisé en ce que** le dispositif de convoyage (10) comporte un premier convoyeur (10a) dans l'enceinte d'enduction (3), un second convoyeur (10b) dans l'enceinte de séchage (23) et une station de transfert (23) disposée entre les deux convoyeurs (10a, 10b).

9. Dispositif selon l'une des revendications 4 à 8, **caractérisé en ce que**, pour un convoyage individuel suspendu du conteneur (2), le moyen de convoyage (12) comporte une tête de serrage (37) venant en prise dans l'ouverture (2a) du conteneur (2) et un tube de protection (30), la tête de serrage (37) étant mobile par rapport au tube de protection (30) de telle façon qu'elle est disposée à l'intérieur du tube de protection (30) dans une première position et fait saillie au dehors du tube de protection (30) dans une seconde position.

10. Dispositif selon la revendication 9, **caractérisé en ce que** le tube de protection (30) présente une longueur axiale qui dépasse la longueur axiale du conteneur (2).

11. Dispositif selon la revendication 9 ou 10, **caractérisé en ce que** la tête de serrage (37) est mobile par l'intermédiaire d'une tige d'actionnement (36) par rapport au tube de protection (30), la tige d'actionnement (36) s'étendant axialement à travers le tube de protection (30), étant contrainte par un ressort (40) dans la première position de la tête de serrage (37) et étant pourvue d'une surface d'attaque par came (38) par laquelle la tête de serrage (37) peut être pressée dans sa seconde position, contre l'action du ressort (40).

12. Dispositif selon l'une des revendications 9 à 11, **caractérisé en ce que** le moyen de convoyage (12) présente un entraînement à friction (46, 47) pour faire tourner la tête de serrage (37) autour de son axe (30').

13. Dispositif selon l'une des revendications 9 à 12, **caractérisé en ce que** le dispositif de convoyage (10) comporte un moyen de convoyage (50) pour le convoyage individuel suspendu du conteneur (2), qui contient une pince de préhension élastique (53a, 53b) coopérant avec un bourrelet (2b) autour de l'ouverture (2a) du conteneur (2).
